(19) Europäisches Patentamt
European Patent Office
Office européen des brevets

(11) Publication number: **0 115 703 B1**

(12) # EUROPEAN PATENT SPECIFICATION

(45) Date of publication of patent specification: **12.08.87**

(21) Application number: **83307999.9**

(22) Date of filing: **29.12.83**

(51) Int. Cl.⁴: **C 08 F 220/56,** E 21 B 43/22 // (C08F220/56, 220:54)

(54) **A micellar process for the formation of acrylamide-alkyl acrylamide copolymers.**

(30) Priority: **29.12.82 US 454239**
**29.12.82 US 454289**

(43) Date of publication of application:
**15.08.84 Bulletin 84/33**

(45) Publication of the grant of the patent:
**12.08.87 Bulletin 87/33**

(84) Designated Contracting States:
**BE DE FR GB IT NL**

(56) References cited:
**DE-B-1 110 422**
**US-A-3 334 072**

(73) Proprietor: **Exxon Research and Engineering Company**
**P.O.Box 390 180 Park Avenue**
**Florham Park New Jersey 07932 (US)**

(72) Inventor: **Siano, Donald Bruce**
**RD No. 2, Box 157 D**
**Lebanon New Jersey 08833 (US)**
Inventor: **Bock, Jan**
**500 Juniper Lane**
**Bridgewater New Jersey 08807 (US)**
Inventor: **Turner, Sam Richard**
**132 Surrey Hill Way**
**Rochester New York 14623 (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

**EP 0 115 703 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to copolymers containing acrylamide.

German Patent Application 1110422 concerns a process for preparing in water and aqueous alcohol solution a copolymer of acrylamide and N-tert-butyl acrylamide in a weight ratio of between 4:6 and 7:3.

The present invention relates to a homogeneous micellar free radical copolymerization process for preparing copolymers of acrylamide and alkyl acrylamide having the formula:

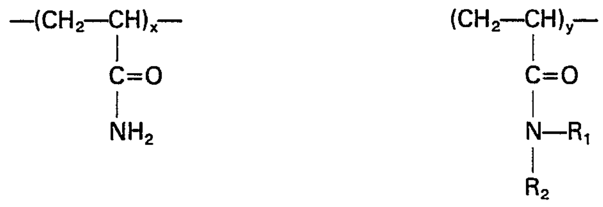

wherein $R_1$ is a $C_6$ to $C_{22}$ alkyl or cycloalkyl group, more preferably $C_6$ to $C_{20}$ and most preferably $C_6$ to $C_{18}$; $R_2$ is the same or different $C_6$ to $C_{22}$ alkyl group as $R_1$, or hydrogen; x is 90.0 to 99.9 mole %, preferably 95.0 to 99.8; and more preferably 97.0 to 99.5; y is 0.1 to 10.0, preferably 0.2 to 5.0, and more preferably 0.5 to 3.0; which process comprises:

(a) forming a mixture of sodium dodecyl sulphate or other suitable surfactant, acylamide monomer and alkyl acrylamide monomer under a nitrogen atmosphere;

(b) adding deoxygenated water to said mixture from step (a) to form a reaction solution;

(c) adding to the reaction solution from step (b), at a temperature of at least 50°C, a free radical initiator to said reaction solution to initiate polymerization of said acrylamide monomer and said alkyl acrylamide monomer; and

(d) copolymerizing said acrylamide monomer and said alkyl acrylamide monomer at a temperature of 0° to 70°C and for a sufficient period of time to form said copolymer.

Preferably the concentration of said acrylamide monomer and said alkylacrylamide monomer in said reaction solution is about 1.0 to about 50.0 grams of said acrylamide monomer and said alkyl acrylamide monomer per 100 grams of water.

The copolymers prepared by the process of this invention are excellent viscosifiers for the modification of the viscosity of aqueous and saline solutions. Examples are those copolymers where the alkyl group is hexyl, octyl, decyl, dodecyl or stearyl.

In copending European Patent Application No. 83307998.1 (EP—A—0 115 213) there is described another copolymerization process for the formation of the hereinabove defined copolymers, which process is a free radical microemulsion copolymerization process comprising the steps of:

(a) forming a solution of a surfactant, an alcohol and an alkane solvent;

(b) adding alkyl acrylamide monomer to the solution from step (a);

(c) forming a deaerated reaction solution from the solution from step (b) by adding thereto acrylamide monomer, and dearated water under nitrogen;

(d) adding to the reaction solution from step (c), at a temperature of at least 50°C, a sufficient quantity of initiator to initiate copolymerization of said acrylamide monomer and said alkyl acrylamide monomer in said reaction solution; and

(e) copolymerizing said acrylamide monomer and said alkyl acrylamide monomer in said reaction solution for a sufficient period of time and at a temperature of 25° to 90°C to form said copolymer.

Suitable alkyl or N,N-dialkyl acrylamide monomers useful in the preparation of the copolymers of the present invention are acrylamides having alkyl groups having 6 to 22 carbon atoms, more preferably 7 to 20; and most preferably 8 to 18. Typical, but non-limiting examples are hexyl acrylamide, octyl acrylamide, decyl acrylamide, dodecyl acrylamide, stearyl acrylamide and N,N-dioctyl acrylamide.

Suitable free radical initiators for the present free radical-copolymerization process are potassium persulfate; sodium thiosulfate, potassium persulfate mixture, and benzoyl peroxide and other common free radical initiators. The concentration of the free radical initiator is about 0.01 to about 0.50 grams per 100 grams of acrylamide monomer and alkyl acrylamide-monomer.

Polymerization of the acrylamide monomer and alkyl acrylamide monomer is effected at a temperature of 0 to 70°C, preferably at 35 to 65°C, and more preferably at 45 to 55°C for a period preferably of 1 to 48 hours, more preferably at 2 to 36, and most preferably at 4 to 24 hours.

A suitable method for recovery of the formed copolymer from the reaction solution comprises precipitation into acetone.

The following Examples illustrate the present invention.

Example 1

Preparation of N-(n-octyl acrylamide)

A 500 ml., 4 necked round bottom flask was equipped with a condenser, thermometer, $N_2$ inlet, magnetic stir bar and dropping funnel. After purging with $N_2$, the n-octylamine, 14.35 g. (0.11 mol.) and

triethylamine, 12.35 g. (0.41 mol.) were mixed with 50 ml. of toluene and added to the flask. The acryloyl chloride, 10.0 g. (0.11 mol.) was dissolved in 50 ml. of toluene and added to the dropping funnel. The reaction is exothermic so the temperature was controlled via an ice bath. The acryloyl chloride was added dropwise so that the contents of the flask stayed below 40°C. The resulting slurry was stirred for an additional hour and then filtered to remove the triethylamine hydrochloride. The filtrate was stripped in a rotary evaporator (removal of toluene). The resulting oil was taken up into 240 ml. of acetone and then cooled to −70°C in a dry ice bath. The monomer crystals were filtered on a coarse filter under $N_2$ and then vacuum dried at room temperature for one day. A yield of 14.3 g. (~70%) of white crystals was obtained. A melting range of 36 to 37°C was observed. The monomer appeared to soften on extended storage at room temperature.

Example 2
Preparation of N-(n-dodecyl acrylamide)

Same procedure as in Example 1 except 20.36 g. (0.11 mol.) of n-dodecylamine was substituted for the n-octylamine.

Example 3
Micellar copolymerization of 99.25/0.75 mole % acrylamide/octyl acrylamide

A one liter flask was equipped with an electric stirrer, reflux condenser, thermometer and inert gas inlet and outlet. The flask was flushed with nitrogen for one half hour. Then 15.85 g. of sodium dodecyl sulfate (Polysciences), 14.76 g. of acrylamide (twice recrystallized) and 0.288 g. of octyl acrylamide were added and then 470.7 g. of water that was deaerated with bubbling $N_2$ was added to the reaction flask. After a few minutes, a homogeneous, water-clear mixture resulted. It was then heated to 50°C and 0.01 g. of potassium persulfate initiator was added. After 24 hours of stirring at this temperature, the mixture became very viscous, but it remained homogeneous and transparent. It was then cooled to room temperature, removed from the reaction vessel and precipitated by the addition of acetone. The polymer was then vacuum dried at room temperature for four days. The result was 9.2 g of a pure white friable solid.

The polymers produced by this method also have a higher value for the Huggins' parameter, $k_h$ defined by the equation:

$$\frac{\eta-\eta_o}{\eta_o}=[\eta]c+k_h[\eta]^2c^2$$

where $\eta$ and $\eta_o$ are the viscosity of the solution and solvent respectively, c is the polymer concentration in g/ml. and $[\eta]$ is the intrinsic viscosity. A high value of $k_h$ means that the viscosity increases more sharply with concentration. Table 1 shows values obtained for these parameters, where the linear fits to five data points where the viscosity ranged from 1.2 to 2.0 cP ($1.2\times10^{-3}$ to $2\times10^{-3}$ $Nsk_h^{-2}$) were used. Table I shows that all of the values of $k_h$ for the Huggins' parameter were larger for the copolymers than for the homopolymers. The values obtained for homopolymers is usually about 0.3 to 0.7, so these copolymers are significantly higher. This shows that viscosities of solutions at finite concentrations can indeed be enhanced by a hydrophobic interchain interaction.

TABLE 1
Intrinsic viscosities and Huggins' parameters for Am/$C_8$Am copolymers

| % $C_8$Am | $[\eta]$ | $k_h$ |
|---|---|---|
| 0.00 | 3.3±0.3 dl/g | 0.68±0.1 |
| 0.25 | 4.2±0.3 | 2.4 ±0.2 |
| 0.50 | 4.0±0.2 | 1.5 ±0.1 |
| 0.75 | 6.6±1.2 | 2.1 ±0.5 |

**Claims**

1. A homogeneous micellar free radical copolymerization process for the formation of a copolymer of acrylamide and an alkyl acrylamide having the formula:

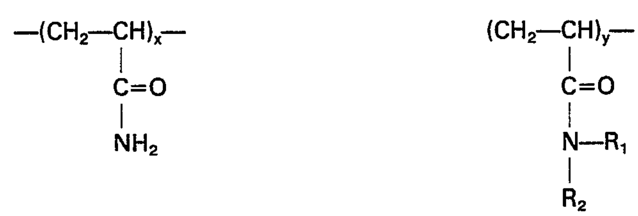

wherein $R_1$ is a $C_6$ to $C_{22}$ alkyl or cycloalkyl group, $R_2$ is the same or different $C_6$ to $C_{22}$ alkyl group as $R_1$ or hydrogen, x is 90.0 to 99.9 mole %, and y is 0.1 to 10.0 mole %; which comprises

(a) forming a mixture of sodium dodecyl sulphate or other suitable surfactant, acrylamide monomer and alkyl acrylamide monomer under a nitrogen atmosphere;

(b) adding deoxygenated water to said mixture from step (a) to form a reaction solution;

(c) adding to the reaction solution from step (b), at a temperature of at least 50°C, a free radical initiator to said reaction solution to initiate polymerization of said acrylamide monomer and said alkyl acrylamide monomer; and

(d) copolymerizing said acrylamide monomer and said alkyl acrylamide monomer at a temperature of 0° to 70°C and for a sufficient period of time to form said copolymer.

2. A process according to claim 1 wherein said copolymer is water soluble.

3. A process according to either of claims 1 and 2 further including recovering said copolymer from said reaction solution.

4. A process according to any one of the preceding claims wherein $R_1$ is selected from hexyl, octyl, decyl, dodecyl or stearyl groups, and $R_2$ is selected from the same group as for $R_1$ or is hydrogen.

5. A process according to any one of the preceding claims wherein said free radical initiator is selected from potassium persulphate; sodium thiosulphate, potassium persulphate mixture; and benzoylperoxide or other common free radical initiators.

6. A process according to any one of the preceding claims wherein said polymerization is carried out for about 1 to about 48 hours.

7. A process according to any one of the preceding claims wherein the concentration of said acrylamide monomer and said alkylacrylamide monomer in said reaction solution is about 1.0 to about 50.0 grams of said acrylamide monomer and said alkyl acrylamide monomer per 100 grams of water.

**Patentansprüche**

1. Homogenes mizellares freiradikalisches Copolymerisationsverfahren für die Bildung eines Copolymers aus Acrylamid und einem Alkylacrylamid mit der Formel

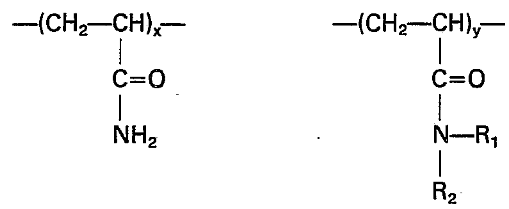

in der $R_1$ eine $C_6$—$C_{22}$-Alkyl- oder -Cycloalkylgruppe ist, $R_2$ die gleiche oder eine andere $C_6$—$C_{22}$-Alkylgruppe wie $R_1$ oder Wasserstoff ist, x 90,0 bis 99,9 Mol% ist und y 0,1 bis 10 Mol% ist, dadurch gekennzeichnet, daß man

(a) eine Mischung aus Natriumdodecylsulfat oder einem anderen geeigneten Tensid, Acrylamidmonomer und Alkylacrylamidmonomer unter einer Stickstoffatmosphäre herstellt,

(b) zu der Mischung aus Stufe (a) zur Bildung einer Reaktionslösung von Sauerstoff befreites Wasser gibt,

(c) zu der Reaktionslösung aus Stufe (b) bei einer Temperatur von mindestens 50°C einen freiradikalischen Initiator gibt, um die Polymerisation des Acrylamidmonomeren und des Alkylacrylamidmonomeren einzuleiten, und

(d) das Acrylamidmonomer und das Alkylacrylamidmonomer bei einer Temperatur von 0 bis 70°C und über einen ausreichend langen Zeitraum für die Bildung des Copolymeren copolymerisiert.

2. Verfahren nach Anspruch 1, dadurch gekennzeichnet, daß das Copolymer wasserlöslich ist.

3. Verfahren nach einem der Ansprüche 1 oder 2, dadurch gekennzeichnet, daß man das Copolymer aus der Reaktionslösung gewinnt.

4. Verfahren nach einem der vorangehenden Ansprüche, dadurch gekennzeichnet, daß $R_1$ ausgewählt ist aus Hexyl-, Octyl-, Decyl-, Dodecyl- oder Stearylgruppen und $R_2$ aus denselben Gruppen wie $R_1$ ausgewählt oder Wasserstoff ist.

5. Verfahren nach einem der vorangehenden Ansprüche, dadurch gekennzeichnet, daß der freiradikalische Initiator ausgewählt ist aus Kaliumpersulfat, Natriumthiosulfat Kaliumpersulfat-Mischung und Benzoylperoxid oder anderen herkömmlichen freiradikalischen Initiatoren.

6. Verfahren nach einem der vorangehenden Ansprüche, dadurch gekennzeichnet, daß man die Polymerisation über einen Zeitraum von etwa 1 bis etwa 48 Stunden durchführt.

7. Verfahren nach einem der vorangehenden Ansprüche, dadurch gekennzeichnet, daß die Konzentration des Acrylamidmonomeren und des Alkylacrylamidmonomeren in der Reaktionslösung etwa 1,0 bis etwa 50,0 g bezüglich des Acrylamidmonomeren und des Alkylacrylamidmonomeren je 100 g Wasser beträgt.

**Revendications**

1. Procédé de copolymérisation radicalaire, homogène en micelles de formation d'un copolymère d'acrylamide et d'alkylacrylamide ayant la formule:

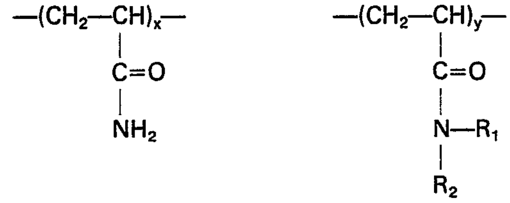

dans laquelle $R_1$ est un groupement alkyle ou cycloalkyle en $C_6$ à $C_{22}$, $R_2$ est le groupement alkyle en $C_6$ à $C_{22}$ identique à $R_1$ ou différent, ou un hydrogène, x est de 90,0 à 99,9% en moles, et y est 0,1 à 10,0% en moles qui comprend:

(a) la formation d'un mélange de dodécylsulfate de sodium ou d'un autre tensioactif approprié, de monomère acrylamide et de monomère alkylacrylamide, sous une atmosphère d'azote;

(b) l'addition d'eau purgée d'oxygène audit mélange provenant de l'étape (a) pour former une solution réactionnelle;

(c) l'addition à la solution réactionnelle provenant de l'étape (b), à une température d'au moins 50°C, d'un initiateur de radicaux libres à ladite solution réactionnelle pour amorcer la polymérisation dudit monomère acrylamide et dudit monomère alkylacrylamide; et

(d) la copolymérisation dudit monomère acrylamide et dudit monomère alkylacrylamide à une température de 0° à 70°C et pendant un temps suffisant pour former ledit copolymère.

2. Procédé selon la revendication 1, dans lequel ledit copolymère est soluble dans l'eau.

3. Procédé selon l'une quelconque des revendications 1 et 2, comprenant en outre la récupération dudit copolymère à ladite solution réactionnelle.

4. Procédé selon l'une quelconque des revendications précédentes dans lequel $R_1$ est choisi parmi les groupements hexyle, octyle, décyle, dodécyle ou stéaryle, et $R_2$ est choisi parmi le même groupe que $R_1$ ou bien est un hydrogène.

5. Procédé selon l'une quelconque des revendications précédentes, dans lequel ledit initiateur de radicaux libres est choisi parmi le persulfate de potassium; le mélange thiosulfate de sodium, persulfate de potassium; et le peroxyde de benzoyle ou parmi d'autres initiateurs de radicaux libres habituels.

6. Procédé selon l'une quelconque des revendications précédentes, dans lequel ladite polymérisation est effectuée pendant environ 1 à environ 48 heures.

7. Procédé selon l'une quelconque des revendications précédentes dans lequel la concentration dudit monomère acrylamide et dudit monomère alkylacrylamide dans ladite solution réactionnelle est d'environ 1,0 à environ 50,0 grammes dudit monomère acrylamide et dudit monomère alkylacrylamide pour 100 grammes d'eau.